# EUROPÄISCHE PATENTSCHRIFT

(11) **EP 0 688 699 B1**
(45) Veröffentlichungstag und Bekanntmachung des Hinweises auf die Patenterteilung: **28.02.2001**
(21) Anmeldenummer: 95108518.2
(22) Anmeldetag: 02.06.1995
(51) Int. Cl.: B60R 16/02

(54) **Vorrichtung zum Unterbrechen des Stromflusses in dem Masse- oder Pluskabel einer Kraftfahrzeugbatterie**
Device for interrupting current flow in the earth -or- in the positif wire in a vehicle battery
Dispositif pour interrompre la circulation de courant dans le câble de masse ou dans le câble du plus dans une batterie de véhicule

(30) Priorität: 24.06.1994 DE 4422249
(43) Veröffentlichungstag der Anmeldung: 27.12.1995
(73) Patentinhaber: Bayerische Motoren Werke Aktiengesellschaft, 80788 München (DE); Bender, Richard, Dr., 91207 Lauf (DE)
(72) Erfinder: Bender, Richard, Dr., D-91207 Lauf (DE); Herget, Christian, D-82380 Peissenberg (DE); Maier, Lothar, D-84577 Tüssling (DE); Krappel, Alfred, D-85737 Ismaning (DE); Albiez, Robert, D-85084 Reichertshofen (DE); Gröbmair, Maximilian, D-83623 Dietramszell (DE)

(56) Entgegenhaltungen:
- DE-U- 7 802 837
- DE-U- 8 433 042
- DE-U- 9 401 486

## Beschreibung

Häufig kommt es bei Fahrzeugunfällen zu einer Beschädigung des Kabelbaumes, einem hieraus resultierenden Kurzschluß und dadurch zu einem Fahrzeugbrand. Ließe sich der Stromfluß in dem an der Fahrzeugbatterie angeschlossenen Masse- oder Pluskabel rechtzeitig, d. h. vor Entstehen eines Kurzschlusses, unterbrechen, so ließe sich ein Kurzschluß und dessen Folgen verhindern.

Der Erfindung liegt die Aufgabe zugrunde, eine Vorrichtung zu schaffen, mit der sich bei einer unfallbedingten Beschädigung des Kabelbaumes ein Kurzschluß verhindern läßt.

Zur Lösung dieser Aufgabe schafft die vorliegende Erfindung eine Vorrichtung zum unterbrechen des Stromflusses in dem Masse- oder Pluskabel der Batterie eines Kraftfahrzeuges, mit einer elektrisch leitenden Steckverbindung, die den Stromfluß durch das Masse- oder Pluskabel im zusammengesteckten Zustand ermöglicht und im getrennten Zustand unterbricht, und einem Gasgenerator, der der Steckverbindung so zugeordnet ist, daß bei einer elektrischen Zündung des Gasgenerators das hierdurch erzeugte Treibgas die Steckverbindung trennt.

Als Gasgenerator kann ein Gasgenerator eingesetzt werden, wie er im Kraftfahrzeugbau als Treibgaserzeuger für Gurtstraffer oder als Zündgasgenerator für den Festtreibstoffsatz eines Airbags Verwendung findet (vgl. beispielsweise DE 34 25 836 A1). Zum Zünden des Gasgenerators kann eine bei Unfällen auslösende Sensorik benutzt werden, wie sie in Verbindung mit Gurtstraffern und/oder Airbags in immer mehr Fahrzeugen vorhanden ist.

Pyrotechnische Trennvorrichtungen für elektrische Kabel sind bereits grundsätzlich bekannt (US 3,793,501 und DE 23 17 930 C2) und werden beispielsweise als Starkstromstromschalter (DE 19 04 244 und 29 09 252) oder als Zünder für militärische Sprengköpfe (FR 0 526 315 A1) eingesetzt. Die vorbekannten pyrotechnischen Trennvorrichtungen sind jedoch konstruktiv vergleichsweise aufwendig und für den erfindungsgemäßen Zweck wenig geeignet.

Dasselbe gilt für eine aus der DE 94 01 486 U bekannte Kontaktvorrichtung, bei der ein konzentrisch zu einem äußeren Kontaktteil angeordnetes Kontaktteil unter der Wirkung einer Treibladung und über ein zwischengeschaltetes Isolierteil linear verfahrbar ist. Bedingt durch Massenträgheit ist die bis zur vollständigen Kontakttrennung erforderliche Reaktionszeit relativ lang.

Gemäß einer bevorzugten Ausführungsform der Erfindung ist vorgesehen, daß die Steckverbindung aus einem rohrförmigen, den Gasgenerator enthaltenden, elektrisch leitenden Gehäuse und einem elektrisch leitenden Stecker besteht, die im zusammengesteckten Zustand an parallel zu einer Längsachse der Steckverbindung verlaufenden Kontaktflächen miteinander in Berührung stehen und durch eine geradlinige Relativbewegung in Richtung der Längsachse trennbar sind. Hierbei weist das Gehäuse einen mit dem Treibgas beaufschlagbaren freien Innenraum auf, der auf einer Stirnseite von einer senkrecht zur Längsachse verlaufenden Angriffsfläche des Steckers und auf einer gegenüberliegenden Stirnseite von dem Gasgenerator begrenzt wird, der eine in den Innenraum mündende Gasaustrittsöffnung besitzt. Insbesondere erlaubt die Erfindung, die Steckverbindung innerhalb kürzester Zeit zu trennen, so daß ein unfallbedingter Kurzschluß mit Sicherheit vermieden wird.

Die erfindungsgemäße Lösung zeichnet sich durch konstruktive Einfachheit und entsprechend niedrige Herstellungs- und Montagekosten aus, so daß sie sich zur Massenherstellung eignet. Außerdem besitzt sie eine große Funktionssicherheit und hohe Lebensdauer.

weitere vorteilhafte Ausgestaltungen der Erfindung ergeben sich aus den Unteransprüchen.

Anhand der Zeichnungen werden Ausführungsbeispiele der Erfindung näher erläutert. Es zeigen:
- Figur 1: einen Längsschnitt durch ein erstes Ausführungsbeispiel der Erfindung;
- Figur 2: einen Längsschnitt durch ein zweites Ausführungsbeispiel;
- Figur 3: einen Längsschnitt durch ein drittes Ausführungsbeispiel;
- Figur 4: einen Längsschnitt durch ein viertes Ausführungsbeispiel;

In den unterschiedlichen Ausführungsbeispielen der vier Figuren wurden die sich funktionsmäßig entsprechenden Teile mit den gleichen Bezugszeichen versehen, obgleich sie sich konstruktiv unterscheiden können.

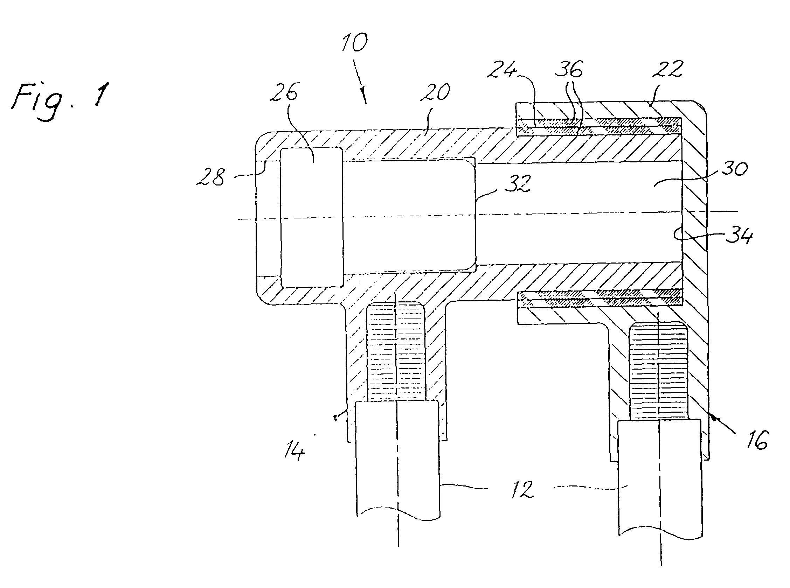

Die in Figur 1 gezeigte Vorrichtung zum Unterbrechen des Stromflusses in dem Masse- oder Pluskabel einer Fahrzeugbatterie (nicht gezeigt) besteht aus einer Steckverbindung 10, die mittels Anschlüsse 14, 16 in das Masseoder Pluskabel 12 so eingesetzt ist, daß sie den Stromfluß durch das Masseoder Pluskabel 12 im zusammengesteckten Zustand (wie dargestellt) ermöglicht und im getrennten Zustand (nicht gezeigt) unterbricht.

Die Steckverbindung 10 besteht aus einem rohrförmigen, ungefähr zylindrischen elektrisch leitenden Gehäuse 20 und einem elektrisch leitenden Stecker 22. Das Gehäuse 20 und der Stecker 22 sind durch eine geradlinige Relativbewegung in Richtung der Längsachse A der Steckverbindung 10 zusammensteckbar bzw. voneinander trennbar und werden durch Reibschluß im zusammengesteckten Zustand gehalten. Die elektrische Verbindung zwischen dem Gehäuse 20 und dem Stecker 22 erfolgt über parallel zur Längsachse A verlaufende zylindrische Kontaktflächen 24.

im linksseitigen Abschnitt des Gehäuses 20 ist ein Gasgenerator 26 angeordnet, der durch Gehäuseschultern axial unverschiebbar gehalten wird. Der Gasgenerator 26, der einen Aufbau wie der für Gurtstraffer eingesetzte Gasgenerator gemäß der DE 34 25 836 A1 haben kann, besitzt eine Treibstoffladung (nicht gezeigt) und einen elektrischen Zünder (nicht gezeigt) und ist über eine elektrische Leitungsverbindung, die sich durch eine Öffnung 28 im Gehäuse 20 erstreckt, mit einer geeigneten Sensorik (nicht gezeigt) im Fahrzeug verbunden, die bei einem Unfall ein entsprechendes Steuersignal zum Zünden des Gasgenerators erzeugt.

Das Gehäuse 20 ist angrenzend an den Gasgenerator 26 mit einem freien Innenraum 30 versehen. In den Innenraum 30 mündet auf seiner (in der Figur) linksseitigen Stirnseite 32 eine Gasaustrittsöffnung (nicht gezeigt) des Gasgenerators 26, derart, daß das vom Gasgenerator 26 bei einer Zündung abgegebene Treibgas in Richtung der Längsachse in den Innenraum 30 ausgestoßen wird. Auf seiner rechten Stirnseite ist der Innenraum 30 von einer Angriffsfläche 34 des Steckers 22 begrenzt. Die Angriffsfläche 34 verläuft senkrecht zur Längsachse A, so daß der vom Treibgas im Innenraum 30 entwickelte Druck auf den Stecker 22 eine Kraft ausübt, die in Richtung der Längsachse A verläuft und somit den Stecker 22 vom Gehäuse 20 abziehen kann.

Die Funktionsweise der beschriebenen Vorrichtung dürfte bereits aus der vorstehenden Beschreibung ersichtlich sein. wird bei einem Unfall der Gasgenerator 26 über die im Fahrzeug vorhandene Sensorik gezündet, so gibt er das hierdurch entwickelte Treibgas in den Innenraum 30 ab. Das an der Angriffsfläche 34 des Steckers 22 angreifende Treibgas treibt das Gehäuse 20 und den Stecker 22 auseinander und unterbricht dadurch den Stromfluß im Masse- oder Pluskabel 12. Sollte an den Kontaktflächen 24 ein Lichtbogen auftreten, so wird er durch das restliche Treibgas gelöscht.

Mit der beschriebenen Vorrichtung läßt sich eine extrem kurze Trenndauer erzielen. Die Trenndauer, d. h. die Zeitspanne vom elektrischen Steuersignal der Sensorik bis zum vollständigen Trennen des Steckers 22 vom Gehäuse 20 beträgt nicht mehr als 4 ms. Auf diese Weise lassen sich ein Kurzschluß und ein hierdurch bedingter Fahrzeugbrand mit Sicherheit verhindern.

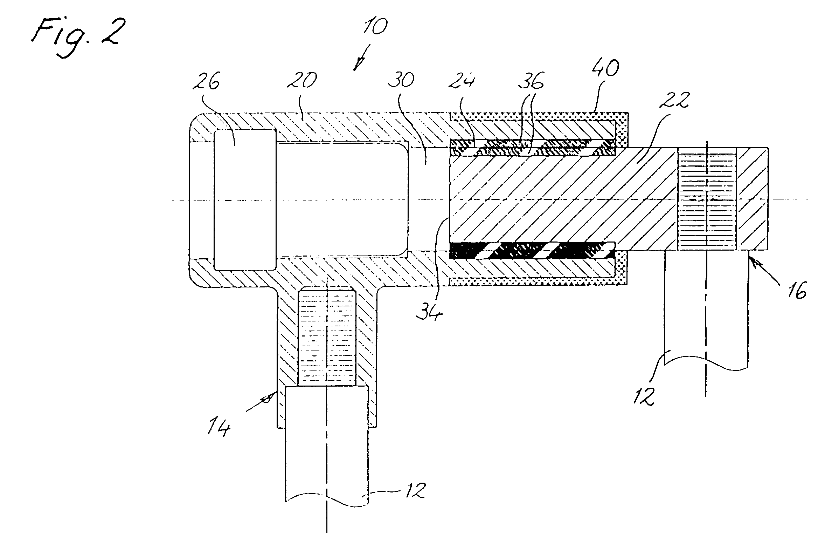

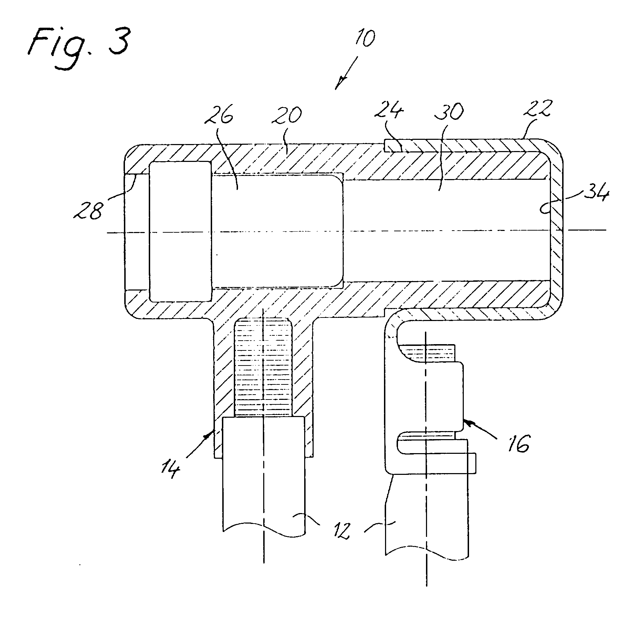

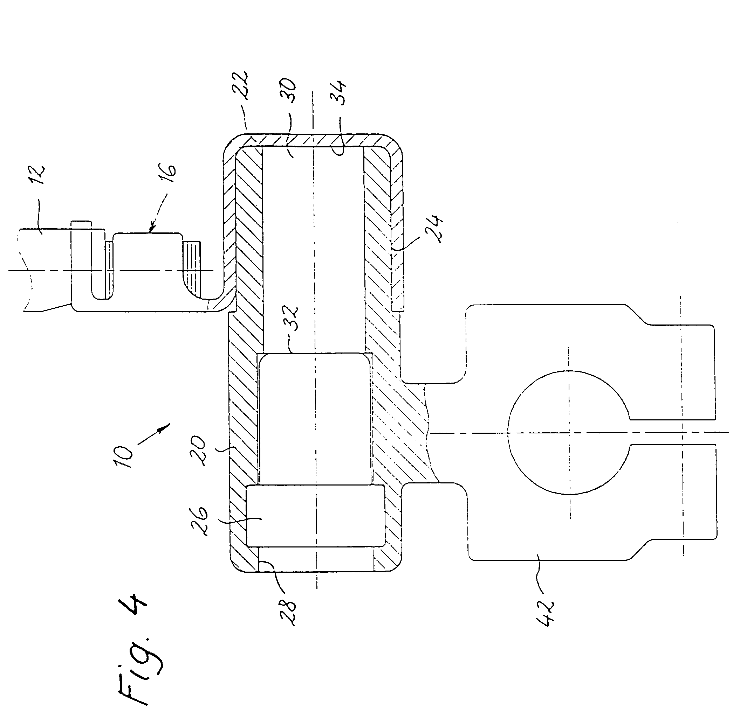

Bei dem in Figur 1 gezeigten Ausführungsbeispiel ist der Stecker 22 als hülsenförmiger, auf die Außenfläche des Gehäuses 20 aufsteckbarer Außenstecker ausgebildet. Eine entsprechende Ausgestaltung haben auch die Stecker 22 der Figuren 3 und 4, wogegen bei dem Ausführungsbeispiel der Figur 2 der Stecker als zapfenförmiger, in das Innere des Gehäuses 20 einsteckbarer Innenstecker ausgebildet ist.

Die Kontaktflächen 24 zwischen dem Gehäuse 20 und dem Stecker 22 müssen einerseits einen geringen elektrischen übergangswiderstand haben und andererseits auch über längere Zeiträume korrosionsfrei bleiben. Bei den Ausführungsbeispielen der Figuren 1 und 2 werden die Kontaktflächen von gesonderten Einsätzen 36 gebildet, die in das Gehäuse 20 bzw. den Stecker 22 eingesetzt sind. Die Einsätze 36 können beispielsweise aus Kupferberyllium (CuBe) bestehen.

Bei den Ausführungsbeispielen der Figuren 3 und 4 werden die Kontaktflächen 22 unmittelbar von entsprechenden Flächen des Gehäuses 20 und des Steckers 22 gebildet. wie für die Funktion der Steckverbindung 10 erforderlich, bestehen das Gehäuse 20 und der Stecker 22 aus einem elektrisch leitenden Material. Vorzugsweise wird hierfür ein Messing verwendet, wie es beispielsweise bei Kabelschuhen eingesetzt wird. Gegebenenfalls könnte aber auch ein Aluminium- oder Zink-Druckguß verwendet werden. Es versteht sich, daß auch andere Materialien eingesetzt werden können.

Wie in Figur 1 angedeutet ist, kann der Stecker als Gußteil ausgebildet sein. Stattdessen kann der Stecker 22 ein tiefgezogenes Blechteil sein, wie dies in den Figuren 3 und 4 angedeutet ist.

Was die elektrischen Anschlüsse 20 betrifft, so können hierfür in der Kraftfahrzeugindustrie übliche Anschlüsse verwendet werden. Eine Möglichkeit besteht darin, die Litzen des Masse- oder Pluskabels 12 mit rohrförmigen Ansätzen des Gehäuses und Steckers zu verlöten, wie dies in den Figuren 1, 2 und 3 (linksseitiger Anschluß) angedeutet ist. Eine andere Möglichkeit besteht darin, sogenannte gecrimpte Anschlüsse zu verwenden, wie sie in Figur 3 (rechtsseitiger Anschluß) und in Figur 4 dargestellt sind.

Wie die Figuren zeigen, verlaufen die elektrischen Anschlüsse14, 16 von der Steckverbindung 10 senkrecht zu der Längsachse A, um die Trennbewegung zwischen Gehäuse und Stecker nicht zu behindern.

Bei den Ausführungsbeispielen der Figuren 1 bis 3 ist die Steckverbindung 10 mit ihren Anschlüssen 14, 16 in das Masse- oder Pluskabel 12 eingesetzt. Eine andere Möglichkeit besteht darin, die Steckverbindung zwischen das Masse- oder Pluskabel 12 und die zugehörige Klemme der Fahrzeugbatterie einzusetzen. Diese Möglichkeit ist in Figur 4 gezeigt, bei der das Gehäuse 20 und die zugehörige Batterieklemme 42 einteilig ausgebildet sind. Der Stecker 22 steht dann über den Anschluß 16 mit dem Masse- oder Pluskabel 12 in Verbindung.

Es empfiehlt sich, die Steckverbindung 10 ganz oder zumindest teilweise mit einer elektrischen Isolierung zu umgeben. Hierzu kann eine Gummikappe oder ein Tauchlack verwendet werden. In Figur 2 ist eine entsprechende Isolierung 40 des Gehäuses 20 angedeutet. Durch die konstruktive Ausführung der Isolierung - wie auch durch geeigneten Einbau der Steckverbindung 10 im Fahrzeug - läßt sich ausschließen, daß der nach einer Trennung zurückschnellende Stecker 22 erneut mit dem Gehäuse 20 Kontakt macht.

## Patentansprüche

1. Vorrichtung zum Unterbrechen des Stromflusses in dem Masse- oder Pluskabel der Batterie eines Kraftfahrzeuges, mit einer elektrisch leitenden Steckverbindung (10), die den Stromfluß durch das Masse- oder Pluskabel (12) im zusammengesteckten Zustand ermöglicht und im getrennten Zustand unterbricht, und einem Gasgenerator (26), der der Steckverbindung (10) so zugeordnet ist, daß bei einer elektrischen Zündung des Gasgenerators (26) das hierdurch erzeugte Treibgas die Steckverbindung (10) trennt, wobei die Steckverbindung einen Stecker enthält, der durch Reibschluß in Wirkstellung gehalten ist und der unter der Wirkung des Treibgases abgezogen wird wobei dabei das Treibgas einen sich ausbildenden Lichtbogen löscht.

2. Vorrichtung nach Anspruch 1, dadurch gekennzeichnet, daß die Steckverbindung (10) aus einem rohrförmigen, den Gasgenerator (26) enthaltenden, elektrisch leitenden Gehäuse (20) und einem elektrisch leitenden Stecker (22) besteht, die im zusammengesteckten Zustand an parallel zu einer Längsachse (A) der Steckverbindung (10) verlaufenden Kontaktflächen (24) miteinander in Berührung stehen und durch eine geradlinige Relativbewegung in Richtung der Längsachse (A) trennbar sind.

3. Vorrichtung nach Anspruch 2, dadurch gekennzeichnet, daß das Gehäuse (20) einen mit dem Treibgas beaufschlagbaren freien Innenraum (30) aufweist, der auf einer Stirnseite von einer senkrecht zur Längsachse (A) verlaufenden Angriffsfläche (34) des Steckers (22) und auf einer gegenüberliegenden Stirnseite von dem Gasgenerator (26) begrenzt wird, der eine in den Innenraum (30) mündende Gasaustrittsöffnung besitzt.

4. Vorrichtung nach Anspruch 2 oder 3, dadurch gekennzeichnet, daß der Stecker (22) als zapfenförmiger, in das Innere des Gehäuses (20) einsteckbarer Innenstecker ausgebildet ist.

5. Vorrichtung nach Anspruch 2 oder 3, dadurch gekennzeichnet, daß der Stecker (22) als hülsenförmiger, auf die Außenfläche des Gehäuses (20) aufsteckbarer Außenstecker ausgebildet ist.

6. Vorrichtung nach einem der Ansprüche 2 bis 5, dadurch gekennzeichnet, daß das Gehäuse (20) und der Stecker (22) jeweils mit einem elektrischen Anschluß (12, 14) zum Einsetzen der Steckverbindung in das Masse- oder Pluskabel (12) versehen ist.

7. Vorrichtung nach einem der Ansprüche 2 bis 5, dadurch gekennzeichnet, daß das Gehäuse (20) oder der Stecker (22) unmittelbar an der Klemme (42) der Batterie angeschlossen ist und das jeweils andere Teil mit einem elektrischen Anschluß (14) zum Verbinden mit dem Masse- oder Pluskabel (12) versehen ist.

8. Vorrichtung nach Anspruch 6 oder 7, dadurch gekennzeichnet, daß die elektrischen Anschlüsse (12, 14) senkrecht zur Längsachse (A) verlaufend von der Steckverbindung (10) abgehen.

9. Vorrichtung nach einem der Ansprüche 2 bis 8, dadurch gekennzeichnet, daß das Gehäuse (20) und/oder der Stecker (22) aus Messing bestehen.

10. Vorrichtung nach einem der Ansprüche 2 bis 9, dadurch gekennzeichnet, daß die Kontaktflächen (24) zwischen dem Gehäuse (20) und dem Stecker (22) von Einsätzen (36) aus einem korrosionsfreien Material geringen elektrischen Widerstandes gebildet werden.

11. Vorrichtung nach Anspruch 10, dadurch gekennzeichnet, daß die Einsätze (36) aus Kupferberyllium (CuBe) bestehen.

12. Vorrichtung nach einem der vorhergehenden Ansprüche, dadurch gekennzeichnet, daß die Steckverbindung (10) ganz oder teilweise von einer Isolierung (40) umschlossen ist.

## Claims

1. A device for interrupting the current in the earth cable or positive cable of a car battery, comprising an electrically conducting plug connector (10) which enables current to flow through the earth cable or positive cable (12) when plugged together and interrupts the current when disconnected, and a gas generator (26) which is so associated with the plug connector (10) that when the gas generator (26) is electrically operated the resulting evolved propellant gas disconnects the plug connector (10), which comprises a plug which is held in the operative position by frictional engagement and is pulled apart by the action of the propellant gas, which quenches any electric spark which might form.

2. A device according to claim 1, characterised in that the plug connector (10) comprises an electrically connecting plug (22) and a tubular electrically conducting casing (20) containing the gas generator (26), and in the connected plate the casing and the plug (22) are in contact along surfaces (24) extending parallel to a longitudinal axis (A) of the plug connector (10), whereas the plug and casing are separable by relative motion in a straight line in the direction of the longitudinal axis (A).

3. A device according to claim 2, characterised in that the casing (20) has a free internal space (30) for supplying with the current gas, the space being surrounded at one end by the gas generator (26) and at the opposite end by an engagement surface (34) of the plug (22) extending at right angles to the longitudinal axis (A), the gas generator having a gas outlet opening into the interior space (30).

4. A device according to claim 2 or 3, characterised in that the plug (22) is an inner plug in the form of a pin insertable into the casing (20).

5. A device according to claim 2 or 3, characterised in that the plug (22) is an external plug in the form of a sleeve for mounting on the outer surface of the casing (20).

6. A device according to any of claims 2 to 5, characterised in that the casing (20) and the plug (22) are each provided with an electric connection (12, 14) for fitting the plug connector into the earth cable or positive cable (12).

7. A device according to any of claims 2 to 5, characterised in that the casing (20) or the plug (22) are directly connected to the battery terminal (42) and the respective other part has an electric connection (14) for connecting to the earth cable or positive cable (12).

8. A device according to claim 6 or 10, characterised in that the electric connections (12, 14) extend from the plug connector (10) at right angles to the longitudinal axis (A).

9. A device according to any of claims 2 to 8, characterised in that the casing (20) and/or the plug (22) are of brass.

10. A device according to any of claims 2 to 9, characterised in that the contact surfaces (24) between the casing (20) and the plug (22) are in the form of inserts (36) made of a non-corroding material having low electric resistance.

11. A device according to claim 10, characterised in that the inserts (36) are made of copper beryllium (CuBe).

12. A device according to any of the preceding claims, characterised in that the plug connector (10) is partly or completely surrounded by insulation (40).

## Revendications

1. Dispositif pour couper le passage du courant électrique dans le câble de masse ou dans le câble positif de la batterie d'un véhicule automobile, comprenant
• un moyen de connexion (10), conducteur électrique, qui permet le passage du courant à travers le câble (12) lorsqu'il est assemblé et qui coupe ce passage lorsqu'il est séparé, et un générateur de gaz (26) associé au moyen de connexion (10) pour que, par un allumage électrique du générateur de gaz (10), le gaz propulseur ainsi engendré ouvre le moyen de connexion (10),
• le moyen de connexion comportant un connecteur maintenu en position active par friction et qui se dégage sous l'effet du gaz propulseur,
• le gaz propulseur éteignant également un arc électrique qui pourrait se former.

2. Dispositif selon la revendication 1,
caractérisé en ce que
le moyen de connexion (10) se compose d'un boîtier (20) tubulaire, conducteur électrique, recevant le générateur de gaz (26), ainsi que d'un connecteur (22) conducteur électrique, ces deux éléments, à l'état engagé, venant en contact l'un avec l'autre par des surfaces de contact (24) parallèles à l'axe longitudinal (A) du moyen de connexion (10), et se séparant par un mouvement relatif rectiligne dans la direction de l'axe longitudinal (A).

3. Dispositif selon la revendication 2,
caractérisé en ce que
le boîtier (20) comporte une chambre libre(30) recevant le gaz propulseur, cette chambre étant délimitée d'un côté par une surface d'attaque (34) du connecteur (22), perpendiculaire à l'axe longitudinal (A), et de l'autre côté par le générateur de gaz (26), ce dernier ayant un orifice de sortie de gaz débouchant dans la chambre (30).

4. Dispositif selon la revendication 2 ou 3,
caractérisé en ce que
le connecteur (22) est un connecteur intérieur en forme de bouchon, qui se place à l'intérieur du boîtier (20).

5. Dispositif selon les revendications 2 ou 3,
caractérisé en ce que
le connecteur (22) est un connecteur extérieur en forme de manchon qui s'engage sur la surface extérieure du boîtier (20).

6. Dispositif selon l'une des revendications 2 à 5,
caractérisé en ce que
le boîtier (20) et le connecteur (22) sont munis chacun d'un branchement électrique (12, 14) pour insérer le moyen de connexion dans le câble de masse ou dans le câble positif (12).

7. Dispositif selon l'une des revendications 2 à 5,
caractérisé en ce que
le boîtier (20) ou le connecteur (22) sont reliés directement à la borne (42) de la batterie, et l'autre partie est munie d'un branchement électrique (14) pour être reliée au câble de masse ou au câble positif (12).

8. Dispositif selon l'une des revendications 6 ou 7,
caractérisé en ce que
les branchements électriques (12, 14) sont perpendiculaires à l'axe longitudinal (A) en partant du moyen de connexion (10).

9. Dispositif selon l'une des revendications 2 à 8,
caractérisé en ce que
le boîtier (20) et/ou le connecteur sont en laiton.

10. Dispositif selon l'une des revendications 2 à 9,
caractérisé en ce que
les surfaces de contact (24), entre le boîtier (20) et le connecteur (22), sont formées par des inserts (36) en matière non corrosive, à faible résistance électrique.

11. Dispositif selon la revendication 10,
caractérisé en ce que
les inserts (36) sont en cuivre-béryllium (CuBe).

12. Dispositif selon l'une des revendications précédentes,
caractérisé en ce que
le moyen de connexion (10) est entouré totalement ou partiellement par une isolation (40).
